# DEMANDE DE BREVET EUROPEEN

(11) **EP 0 676 616 A1**
(43) Date de publication de la demande: **11.10.1995**
(21) Numéro de dépôt: 95400684.7
(22) Date de dépôt: 28.03.1995
(51) Int. Cl.: G01B 9/02, G01J 3/453, G01D 5/36

(54) **Ligne à retard pour interféromètre**

(30) Priorité: 05.04.1994 FR 9403974
(71) Demandeur: AEROSPATIALE Société Nationale Industrielle, F-75781 Paris Cédex 16 (FR)
(72) Inventeur: Leblanc, Jean-Marc, F-06530 Peymeinade (FR); Sghedoni, Michel, F-06810 Auribeau S/Siagne (FR)
(74) Mandataire: Rinuy, Santarelli

(57) **Abrégé**

Une ligne à retard pour interféromètre comporte une charge utile optique (3) commandée en déplacement le long d'une piste de guidage (2) sous l'action d'un dispositif de contrôle comportant au moins un dispositif de détection destiné à détecter la position de la charge utile le long de la piste de guidage et un dispositif d'entraînement agissant sur cette charge utile. Ce dispositif de détection comporte, parallèlement à la piste de guidage, une succession linéaire de têtes optiques de lecture fixes et une règle graduée portée par la charge utile optique en étant en toute position de celle-ci en regard d'au moins l'une des têtes optiques de lecture, le dispositif de détection comportant en outre un élément de synchronisation/commutation adapté à faire compter successivement par un compteur des impulsions provenant de ces têtes et représentatives d'incréments de distance.

## Description

L'invention concerne une ligne à retard pour interféromètre, notamment du type utilisé dans un dispositif interférométrique, tel qu'un spectromètre à transformée de FOURIER, dans lequel on cherche non seulement à stabiliser dynamiquement l'élément optique au cours d'un mouvement programmé, de façon à éliminer l'effet des vibrations, mais en outre à compenser des différences de chemin optique perturbatrices générées indépendamment de cet élément optique et de son mouvement, dans le reste du dispositif interférométrique, voire à l'extérieur de celui-ci. Il peut également s'agir d'une ligne à retard optique prévue au sein d'un interféromètre stellaire à recombinaison cohérente. Dans un tel cas, lorsque la distance (appelée base) séparant les télescopes est de l'ordre de 100 mètres, l'égalisation des chemins optiques, malgré la rotation de la Terre, nécessite un déplacement du dispositif rétro-réflecteur de la ligne à retard optique sur une distance de plusieurs mètres, avec une vitesse de quelques dizaines de millimètres par seconde, et une précision de positionnement, en valeur moyenne de quelques microns, et en valeur instantanée (pendant un temps de pose de quelques centièmes de seconde) de quelques nanomètres (amplitude des vibrations) : les contraintes sont donc plus sévères sur l'erreur dynamique que sur l'erreur statique.

De telles caractéristiques de déplacement sont également nécessaires dans le cas où l'on chercherait à réaliser l'égalité des chemins optiques par le déplacement des télescopes eux mêmes.

Le détail d'une ligne à retard a déjà été donné dans, notamment, le document EP-0 398 772 (invention de M. KOEHLER). Dans ce document est décrit un dispositif de commande en déplacement sans vibrations destiné au contrôle statique et dynamique d'un élément optique mobile, au sein d'un dispositif interférométrique, suivant une direction, comportant une voie de guidage, un chariot portant une charge utile comportant cet élément optique et mobile le long de la voie de guidage, un moteur pour l'entraînement de ce chariot le long de cette voie de guidage, un élément de commande en entraînement connecté à ce moteur d'entraînement pour déplacer ce chariot selon une loi de consigne prédéterminée. Cette charge utile était liée au chariot par des éléments de liaison flexible autorisant parallèlement à ladite direction un débattement relatif entre le chariot et la charge utile, et au moins un actionneur était prévu pour agir sur au moins une partie de l'élément optique sous le contrôle d'au moins une boucle d'asservissement en stabilisation connectée à au moins un second capteur. Ce dispositif était caractérisé en ce que cette boucle d'asservissement en stabilisation était unique et indépendante de l'élément de commande en entraînement, en ce que le second capteur, unique, était un accéléromètre porté par la charge utile et sensible à l'accélération de la charge utile parallèlement à ladite direction, en ce que l'actionneur, unique, agissait sur l'ensemble de la charge utile en prenant appui sur le chariot, en ce que cette boucle d'asservissement en stabilisation comportait un étage de filtrage du signal de l'accéléromètre, et en ce que l'élément de commande en entraînement comportait une boucle d'asservissement connectée à un capteur de position adapté à détecter la position du chariot sur la voie de guidage.

L'invention a pour objet de permettre des améliorations supplémentaires des performances des lignes à retard connues.

Un premier objet de l'invention est de permettre la mesure du déplacement d'un équipage mobile sur une distance quelconque à partir d'une règle graduée de grande précision mais de longueur limitée, inférieure à la distance de débattement. Typiquement la longueur du déplacement est de plusieurs mètres, voire 10 à 100 m voire même plus, et la longueur de la règle de 1 m.

Des règles de grande précision n'existant pas pour des longueurs de déplacement aussi importantes, l'intérêt de l'invention, selon ce premier aspect, est d'obtenir la précision de la petite règle sur la grande course, et ce de manière avantageusement modulaire.

En fait, on connaît déjà des dispositifs de détection de position comportant une règle graduée fixe et une tête optique se déplaçant devant cette règle et adaptée à fournir des impulsions représentatives d'incréments de distance (ou de déplacement de la tête par rapport à la règle) ; en fait ces têtes sont équipées de dispositifs électroniques de traitement tels que les impulsions en sortie puissent correspondre à des incréments de distance très inférieurs aux intervalles séparant les graduations de la règle ; à titre d'exemple, les incréments de distance sont de l'ordre de 15 nanomètres pour des intervalles de 4 microns entre graduations.

De telles règles graduées, coopérant avec des têtes optiques en sorte de fournir une résolution du type précité, n'existent qu'avec des longueurs limitées, typiquement de l'ordre d'au plus un mètre environ. D'autres règles existent sous forme de ruban pouvant atteindre une trentaine de mètres environ, mais leur précision et leur résolution, très inférieures aux valeurs précitées, ne sont pas compatibles avec les exigences requises pour une ligne à retard d'interféromètre astronomique.

L'invention propose, pour pallier les inconvénients précités, une ligne à retard pour interféromètre comportant une piste de guidage s'étendant sur une distance donnée selon une direction prédéterminée, une charge utile optique commandée en déplacement le long de la piste de guidage sous l'action d'un dispositif de contrôle, lequel dispositif de contrôle comporte au moins un dispositif de détection destiné à détecter la position d'un ensemble comportant la charge utile le long de la piste de guidage et comportant au moins une règle graduée parallèle à la piste de guidage, une tête optique de lecture fournissant des impulsions représentatives d'incréments de déplacement relatif règle-tête, et un compteur pour compter ces impulsions, ce dispositif de contrôle comportant en outre un dispositif d'entraînement destiné à agir au moins indirectement sur cette charge utile sous la commande d'un ensemble d'asservissement connecté à ce dispositif de détection,
cette ligne à retard étant caractérisée en ce que ce dispositif de détection comporte, parallèlement à la piste de guidage, une succession linéaire de têtes optiques de lecture qui sont fixes par rapport à la piste de guidage, la règle graduée ayant une longueur au moins égale au plus grand des intervalles entre têtes successives et étant portée par la charge utile optique en étant en toute position de celle-ci en regard d'au moins l'une des têtes optiques de lecture, le dispositif de détection comportant en outre un élément de synchronisation/commutation connecté aux têtes optiques et au compteur et adapté à faire compter successivement par le compteur des impulsions provenant de ces têtes.

On appréciera que cet aspect de l'invention consiste à rendre solidaire la règle de la charge utile mobile. La règle, de dimension réduite, se déplace devant les têtes optiques de lecture, fixes. Il y a autant de têtes de lecture qu'il le faut pour couvrir toute la course (d'où un aspect modulaire). Les têtes sont espacées avec un intervalle égal ou inférieur à la longueur de la règle ; il y a donc une distance de recouvrement et la règle peut être lue à un moment donné par deux têtes : la tête opérationnelle n et la tête suivante n + 1 qui prend le relais de la tête n lorsque celle-ci ne voit plus la règle. Pendant cette phase de recouvrement, les deux têtes n et n + 1 lisent la règle et le passage de relais s'effectue de la tête n vers la tête n + 1. On comprend aisément que l'intervalle entre têtes est de préférence constant mais que ce qui précède se généralise au cas d'intervalles successifs non égaux, du moment que la règle est plus longue que le plus grand des intervalles entre têtes.

Cet aspect de l'invention a ceci de surprenant que l'on pouvait raisonnablement prévoir que, puisqu'on ne savait réaliser pour l'instant, avec un couple (règle + tête), une détection suffisamment précise de la position d'un mobile que sur un faible débattement (de l'ordre du mètre environ), l'obtention de ce niveau de précision pour des débattements sensiblement plus importants (de quelques mètres à plusieurs dizaine(s) de mètres, voire plus) requérerait nécessairement des solutions techniques de mesure tout à fait différentes bien plus sophistiquées.

Or la solution proposée ci-dessus, avec une règle graduée connue en soi, se déplaçant le long d'une succession de têtes connues en soi, permet de conserver le niveau de performances d'une règle unique combinée à une tête unique, sans induire de contraintes sévères ni sur le positionnement des têtes parallèlement à la piste de guidage, ni sur la synchronisation des déclenchements des têtes ou sur la commutation entre les voies d'arrivée des impulsions à faire compter par le compteur.

En fait, il suffit de connaître de façon peu précise (par exemple au millimètre près) la position instantanée de la charge utile pour pouvoir déterminer devant quelle(s) tête(s) se trouve la règle et donc quelle(s) tête(s) doit(doivent) être maintenues activées pour l'instant considéré. D'autre part, la tolérance quant au positionnement de chaque tête par rapport aux voisines (ou vis à vis d'un point de référence de la ligne de retard) peut être modérée (par exemple de l'ordre du millimètre, voire plus) du moment que cette tolérance est suffisamment petite pour garantir que chaque tête commence à "voir" la règle avant que la tête précédente ne cesse de voir ladite règle, et donc garantir qu'il y ait un recouvrement minimum lorsque la règle passe d'une tête à la suivante. Enfin, la commutation du compteur, lorsqu'un tel recouvrement est constaté, pour que ce dernier cesse de prendre en compte les impulsions provenant d'une tête pour désormais prendre en compte les impulsions provenant de la tête suivante, n'a pas besoin de satisfaire des critères sévères : il suffit qu'il y ait le recouvrement considéré. Il est à noter que l'incidence d'un éventuel déphasage entre les impulsions générées par les deux têtes, voyant les extrémités de la règle à un instant donné, reste faible puisque ce déphasage induit, entre la dernière impulsion de la tête amont et la première impulsion de la tête aval, une erreur par rapport à l'intervalle entre deux impulsions d'une même tête qui reste inférieure à cet intervalle. A titre d'exemple, pour une règle de longueur 1,02 m et un écart maximal (ou constant) de 1,0 m entre têtes il y a un recouvrement de 2 cm ; et si les impulsions des têtes correspondent à des incréments de distance de l'ordre de 15 nm, un éventuel déphasage entre les impulsions délivrées par des têtes successives induit au plus une incertitude de l'ordre de 15 nm par mètre, ce qui est tout à fait acceptable.

Selon des dispositions préférées de l'invention :
- l'intervalle entre têtes successives est constant,
- la règle a une longueur utile de 1,001 à 1,1 fois la distance maximale séparant deux têtes successives quelconques ;
- la règle a une longueur de l'ordre du mètre ;
- les impulsions fournies par les têtes sont représentatives d'incréments de distance inférieurs à 10⁻⁷m.

Un autre objet de l'invention, éventuellement indépendant du premier aspect, est de réaliser un guidage en translation d'un équipage optique assurant, par son mouvement de translation, la maîtrise de la longueur d'un chemin optique dans une expérience, l'expérience considérée étant de préférence, mais pas nécessairement, une expérience interférométrique dans laquelle la qualité des résultats dépend directement de la maîtrise du mouvement de translation permettant d'égaliser la longueur de deux chemins optiques. L'équipage mobile est soumis simultanément aux efforts de guidage apportant des effets perturbateurs (bruits de guidage) et aux efforts de motorisation résultant du contrôle par asservissement. Le guidage doit apporter le minimum de perturbations de nature vibratoire à l'équipage mobile dans la direction de translation, mais également dans les autres directions.

Dans certains cas (voir notamment le document EP-0 398 772 précité) la charge utile est portée par un chariot mobile selon la piste de guidage ; la charge est reliée au chariot par une liaison constituant un étage de filtrage des bruits de roulement dans la direction de translation, et constituée d'éléments souples dans la direction longitudinale (rigides dans les directions latérales) afin de filtrer passivement les perturbations longitudinales hautes fréquences provenant du bruit de guidage.

Les techniques de guidage utilisées jusqu'à présent sont du type à frottement solide ou à roulement.

Il a été également proposé (voir ici encore le document EP-0 398 772 précité) d'utiliser un guidage du chariot par coussins d'air.

On connaît à ce propos des patins (pads en anglais) aérostatiques de type poreux qui sont a priori bien adaptés à un guidage sans vibrations, en raison de leur faible niveau de bruit mécanique. Cependant, l'épaisseur du film d'air est très faible (3 à 5 µm) et impose de ce fait des contraintes géométriques très sévères aux pistes de guidage.

On comprend qu'il est irréaliste de prétendre respecter de telles contraintes géométriques sur des pistes de guidage sur des grandes longueurs de plusieurs mètres ou dizaines de mètres ; la mise en oeuvre de patins aérostatiques paraît de ce fait irréaliste dans les lignes à retard de grande longueur.

Pour permettre de tirer parti des avantages de tels patins aérostatiques sur de grandes distances, l'invention propose, selon le deuxième aspect précité, une ligne à retard pour interféromètre comportant une piste de guidage s'étendant sur une distance donnée selon une direction prédéterminée, une charge utile optique commandée en déplacement le long de la piste de guidage sous l'action d'un dispositif de contrôle, lequel dispositif de contrôle comporte au moins un dispositif de détection destiné à détecter la position d'un ensemble comportant la charge utile le long de la piste de guidage et un dispositif d'entraînement destiné à agir au moins indirectement sur cette charge utile sous la commande d'un ensemble d'asservissement connecté à ce dispositif de détection, cette ligne étant caractérisée en ce que la charge utile optique est portée, par l'intermédiaire de paliers aérostatiques ayant des plans d'appui parallèles à ladite direction, par un chariot mobile sur la piste de guidage, ledit dispositif d'entraînement comportant un actionneur prévu entre ce chariot et cette charge utile pour contrôler la position relative de cette charge parallèlement à cette direction.

Il est à noter que ces patins aérostatiques, outre qu'ils n'induisent aucun frottement s'opposant à un mouvement de translation relatif entre charge et chariot parallèlement à la direction de guidage, se sont révélés capables de préserver efficacement la charge vis à vis des vibrations du chariot au cours de son roulement ou son glissement même sur de grandes distances, sans imposer pour autant pour la piste de guidage, sur toute sa longueur, les contraintes géométriques sévères mentionnées ci-dessus. En d'autres termes, la mise en oeuvre de patins aérostatiques seulement à l'interface charge utile/chariot (sur une course faible, par exemple de l'ordre de quelques millimètres) est apparue suffire pour atteindre les avantages dont on pouvait penser assurer une sustentation aérostatique du chariot sur toute sa course.

De manière préférée, ces patins aérostatiques ont des plans d'appui formant conjointement deux plans parallèles à ladite direction et inclinés l'un par rapport à l'autre.

Selon un aspect intéressant en soi de l'invention, lorsqu'il y a un chariot supportant la charge (et cela est valable même si le mode de sustentation de cette charge sur le chariot n'utilise pas des paliers aérostatiques), l'actionneur agissant sur la charge utile à partir du chariot est asservi au dispositif de détection adapté à détecter la position relative de la charge utile par rapport à la piste de guidage par l'intermédiaire d'une première boucle recevant un signal de consigne, et il y a un second actionneur interposé entre le chariot et une zone fixe par rapport à la piste de guidage, ce second actionneur étant asservi à un capteur de position adapté à détecter la position relative de la charge utile par rapport au chariot par l'intermédiaire d'une seconde boucle ayant de préférence une consigne nulle de façon à ce que les courses de guidage des patins aérostatiques (ou autres supports) et de l'actionneur restent centrées.

De manière préférée :
- le second actionneur est une roue motrice portée par le chariot et roulant sur la piste de guidage,
- la première boucle d'asservissement est en outre connectée à une boucle accessoire comportant un accéléromètre porté par la charge utile, ce qui a pour avantage d'augmenter fictivement la masse de la charge utile,
- l'actionneur agissant sur la charge utile à partir du chariot est un moteur électromagnétique de type haut-parleur.

Des objets, caractéristiques et avantages de l'invention ressortent de la description qui suit, donnée à titre d'exemple non limitatif, en regard des dessins annexés sur lesquels :
- la figure 1 est une vue schématique générale d'une ligne à retard pour interférométrie conforme à l'invention,
- la figure 2 est une vue en coupe transversale schématique d'un ensemble chariot-charge utile dans une variante de réalisation,
- la figure 3 est un schéma fonctionnel du dispositif de détection, de la figure 1, et
- la figure 4 est un schéma fonctionnel des boucles d'asservissement de la ligne à retard de la figure 1.

Il est rappelé tout d'abord qu'un interféromètre stellaire comporte deux télescopes recevant respectivement des rayonnements provenant d'un même objet du ciel (non représenté). Ces télescopes comportent des miroirs qui renvoient ces rayonnements incidents vers une station de recombinaison d'ondes dans laquelle se forment des franges d'interférences caractéristiques du rayonnement émis par cet objet.

Le problème est d'ajuster, à chaque instant, le chemin optique dans l'un des bras de l'interféromètre stellaire afin de compenser en permanence des différences de marche d liées aux variations de la position, dans le ciel, de l'objet observé et aux perturbations extérieures. La différence de marche à compenser vaut B.sinz où B est la distance séparant les télescopes et z est l'angle zénithal de l'objet. L'ajustement du chemin optique se fait en pratique par l'introduction, dans un des bras de l'interféromètre, d'un dispositif appelé "ligne à retard" constitué d'un rétroréflecteur optique mobile selon une direction D.

Les spécifications techniques de besoins pour un dispositif de ligne à retard dépendent essentiellement de la distance séparant les télescopes, de l'orientation de la ligne joignant les télescopes par rapport à l'axe Nord-Sud, de la position, dans le ciel, des objets à observer, du temps de pose pendant lequel l'image des franges d'interférence est intégrée et de la précision requise sur la mesure du contraste des franges. Les spécifications essentielles sont :
1. la course linéaire de l'équipage mobile de la ligne à retard (quelques mètres),
2. la vitesse de déplacement du rétroréflecteur (variable de zéro à quelques dizaines de millimètres/seconde),
3. la précision de positionnement de l'équipage mobile (rétroréflecteur) en valeur moyenne (quelques micromètres),
4. la précision dynamique de positionnement du rétroréflecteur autour de sa position moyenne, c'est-à-dire la précision de la compensation des différences de chemin optique. Cette précision dynamique constitue le point le plus critique car elle conditionne la précision (quelques pour cents) sur la mesure du contraste des franges. Elle s'exprime en écart quadratique moyen d'erreur de position (quelques nanomètres) sur une fenêtre temporelle correspondant au temps de pose de l'observation (quelques fractions de seconde à quelques minutes),
5. l'amplitude (quelques centimètres à quelques micromètres selon la fréquence) et la fréquence (jusqu'à quelques dizaines de Hertz) des différences de chemin optique à corriger par la ligne à retard.

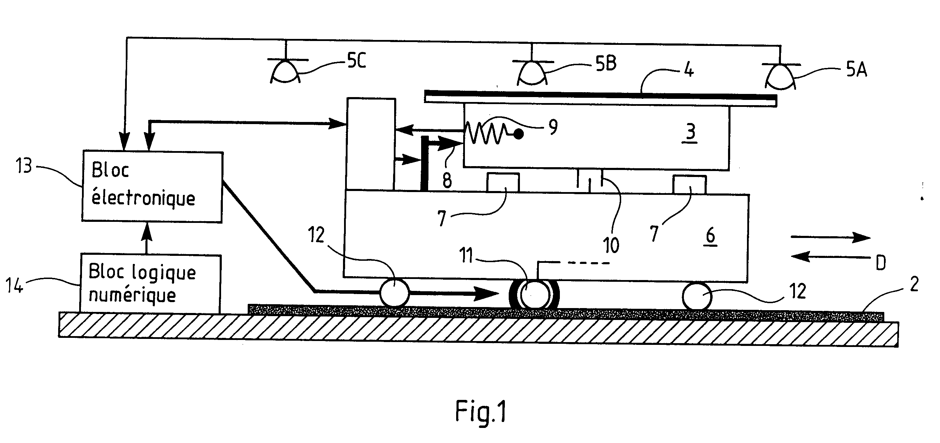

La figure 1 montre une ligne à retard 1 adaptée à être intégrée à un interféromètre du type précité, conforme à une version particulièrement performante de l'invention.

Cette ligne à retard 1 comporte :
- une piste de guidage 2 s'étendant sur une distance donnée (par exemple de l'ordre de quelques mètres voire 30 à 50 mètres ou même plus) selon la direction D,
- une charge utile optique 3 mobile en déplacement parallèlement à la piste de guidage,
- un dispositif de détection destiné à détecter la position de la charge utile le long de la piste de guidage et comportant au moins une règle graduée 4 parallèle à la piste de guidage et, parallèlement à cette dernière, une succession linéaire de têtes optiques de lecture (ici numérotées 5A, 5B et 5C bien qu'il puisse en pratique y avoir des têtes en nombres très supérieurs) qui sont fixes par rapport à la piste et qui ont de préférence des intervalles égaux ; la longueur de la règle (par exemple 1,02 m) est légèrement supérieure à l'intervalle maximal entre têtes (par exemple 1 m) ; la règle est portée par la charge utile optique en sorte d'être, pour toute position de cette charge, en regard d'au moins une tête,
- un chariot 6, mobile le long de la piste de guidage, et portant la charge utile 3 à l'aide d'une liaison avantageusement formée de patins aérostatiques 7,
- un premier actionneur 8 destiné à agir sur la charge utile à partir du chariot 6 parallèlement à D,
- un accéléromètre 9 porté par la charge utile, dont l'axe sensible est parallèle à D,
- un capteur de position 10 adapté à détecter la position relative de la charge utile par rapport au chariot,
- un second actionneur 11 destiné à commander en mouvement le chariot le long de la piste de guidage ; il s'agit ici d'une roue motrice portée par le chariot et roulant sur une portion fixe par rapport à la piste de guidage ; le chariot est ici porté en outre par des roues libres 1 et 2,
- un bloc électronique 13 connecté, par des lignes fixes ou flexibles selon les cas, aux têtes optiques de lecture, au premier actionneur, à l'accéléromètre, au capteur de position, et au second actionneur,
- un bloc logique de traitement 14, connecté au bloc électronique, un convertisseur analogique/numérique et numérique/analogique (non représenté) étant prévu entre ces blocs.

La règle graduée (avec des graduations tous les 4 µm par exemple) apparaît ici au-dessus de la charge utile mais pourrait en variante être sur un côté longitudinal latéral, voire en dessous (de nombreuses configurations sont envisageables).

Les têtes sont munies, soit au sein de leur boîtier, soit au sein du bloc électronique 13, de chaînes de traitement générant des impulsions représentatives d'incréments de distance (relative entre règle et têtes), par exemple de l'ordre de 10⁻⁷m au plus.

Les règles et ces têtes sont connues en soi ; il s'agit par exemple des produits vendus par HEIDENHAIN sous la référence LIP 101.

Les patins aérostatiques 7 sont avantageusement de type poreux ; ils sont de préférence solidaires du chariot, de sorte qu'aucune vibration ou effort parasite ne peut être transmis à la charge utile par les tubulures d'alimentation en gaz comprimé (non représentées) qui sont connectées aux patins.

Les patins aérostatiques ont des plans d'appui (c'est-à-dire d'interface avec la charge utile) qui sont parallèles à la direction D.

Sur la figure 1 les patins ont des plans d'appui coplanaires horizontaux.

De manière préférée ces patins aérostatiques ont des plans d'appui formant conjointement deux plans parallèles à D mais inclinés l'un par rapport à l'autre.

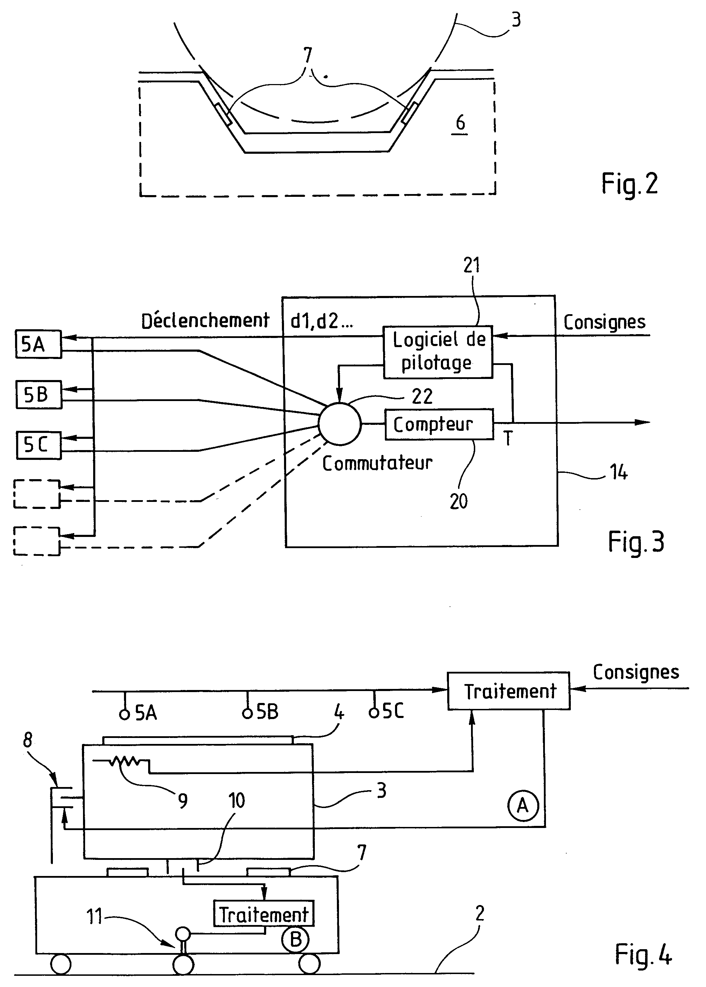

C'est ainsi par exemple que, dans la variante de la figure 2, le chariot comporte une gorge longitudinale de section trapézoïdale symétrique, et les patins aérostatiques sont disposés sur les flancs (avec donc des inclinaisons égales mais opposées par rapport à l'horizontale). Il en résulte un positionnement rigide du berceau que comporte la charge utile selon 5 degrés de liberté tout en évitant toute résistance au déplacement parallèlement à D.

Le premier actionneur linéaire 8 est de préférence du type sans contact ; il s'agit avantageusement d'un moteur électromagnétique du type haut-parleur.

Le capteur de position 10 est de tout type connu approprié ; il s'agit avantageusement d'un capteur du type LVDT (en anglais Linear Variable Differential Transformer) ; il est réglé en sorte de donner un signal nul lorsque la charge utile est centrée longitudinalement sur le chariot.

Le débattement longitudinal de la charge utile vis à vis du chariot est typiquement de l'ordre de + 3 mm.

La figure 3 est un schéma montrant différents éléments fonctionnels qui, du point de vue matériel sont regroupés en tout ou partie dans les blocs 13 ou 14 pour le fonctionnement du dispositif de détection.

On voit que le bloc numérique 14 comporte un compteur 20 dont le signal de sortie T donne un total d'incréments, donc la distance de la charge utile par rapport à une référence de la piste de guidage.

Ce signal T est appliqué à un logiciel de pilotage 21 qui, en fonction de la position instantanée, détermine laquelle ou lesquelles des têtes sont à activer, par des lignes de déclenchement d1, d2 ..... ainsi que le numéro de la tête dont on doit à chaque instant prendre les impulsions en considération, avec commutation en 22 d'une tête à une autre lorsque la charge utile est dans une position pour laquelle on sait par avance (ou on le constate) que la règle est en train de sortir du champ de vue de la première tête tout en entrant dans celui de la seconde tête.

La commande des actionneurs se fait avantageusement suivant des boucles d'asservissement indépendantes ainsi que cela ressort de la figure 4 sur laquelle ces boucles sont figurées du point de vue fonctionnel, indépendamment de leur matérialisation dans la figure 1 :
- le premier actionneur 8 est activé selon une première boucle A recevant les signaux de mesure (totaux d'impulsions) du dispositif de détection 4 + 5A ...., les signaux de l'accéléromètre, et un signal de consigne en position,
- le second actionneur est activé selon une seconde boucle B recevant les signaux de mesure du capteur LVDT, en sorte que ces signaux restent nuls (asservissement selon une consigne nulle).

Les lois d'asservissement sont de tous types connus appropriés.

A titre d'exemple une ligne à retard conforme à ce qui précède a été réalisée dans le cadre du projet LAROCA développé pour l'Observatoire de la Côte d'Azur selon les particularités suivantes :
- course de 3 mètres,
- 0,2 µm/s à 3 mm/s.

On comprend aisément que cette configuration s'extrapole de façon modulaire à des courses bien plus longues, si nécessaire il suffit de rallonger la succession des têtes.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Ligne à retard pour interféromètre comportant une piste de guidage (2)s'étendant sur une distance donnée selon une direction prédéterminée, une charge utile optique (3) commandée en déplacement le long de la piste de guidage sous l'action d'un dispositif de contrôle, lequel dispositif de contrôle comporte au moins un dispositif de détection destiné à détecter la position d'un ensemble comportant la charge utile le long de la piste de guidage et comportant au moins une règle graduée (4) parallèle à la piste de guidage, une tête optique de lecture fournissant des impulsions représentatives d'incréments de déplacement relatif règle-tête, et un compteur (20) pour compter ces impulsions, ce dispositif de contrôle comportant en outre un dispositif d'entraînement (8, 11)destiné à agir au moins indirectement sur cette charge utile sous la commande d'un ensemble d'asservissement connecté à ce dispositif de détection,
cette ligne à retard étant caractérisée en ce que ce dispositif de détection comporte, parallèlement à la piste de guidage, une succession linéaire de têtes optiques de lecture (5A, 5B, 5C) qui sont fixes, la règle graduée ayant une longueur au moins égale au plus grand des intervalles entre têtes et étant portée par la charge utile optique (3) en étant en toute position de celle-ci en regard d'au moins l'une des têtes optiques de lecture, le dispositif de détection comportant en outre un élément de synchronisation/commutation connecté aux têtes optiques et au compteur et adapté à faire compter successivement par le compteur des impulsions provenant de ces têtes.

2. Ligne à retard selon la revendication 1, caractérisée en ce que les écarts entre têtes successives sont identiques.

3. Ligne à retard selon la revendication 1 ou la revendication 2, caractérisée en ce que la règle a une longueur utile d'au moins 1,001 à 1,1 fois la distance maximale séparant deux têtes successives quelconques.

4. Ligne à retard selon l'une quelconque des revendications 1 à 3, caractérisée en ce que la règle a une longueur de l'ordre du mètre.

5. Ligne à retard selon l'une quelconque des revendications 1 à 4, caractérisé en ce que les impulsions fournies par les têtes sont représentatives d'incréments de distance inférieurs à 10⁻⁷m.

6. Ligne à retard selon l'une quelconque des revendications 1 à 5, caractérisée en ce que la charge utile optique est portée par l'intermédiaire de paliers aérostatiques (7) ayant des plans d'appui parallèles à ladite direction, par un chariot (6) mobile sur la piste de guidage, ledit dispositif d'entraînement comportant un actionneur (8) prévu entre ce chariot et cette charge utile pour contrôler la position relative de cette charge parallèlement à cette direction.

7. Ligne à retard selon la revendication 6, caractérisé en ce que ces patins aérostatiques (7) ont des plans d'appui formant conjointement deux plans parallèles à ladite direction et inclinés l'un par rapport à l'autre.

8. Ligne à retard selon la revendication 6 ou la revendication 7, caractérisée en ce que l'actionneur (8) agissant sur la charge utile à partir du chariot est asservi au dispositif de détection (4, 5A, 5B, 5C) adapté à détecter la position relative de la charge utile par rapport à la piste de guidage par l'intermédiaire d'une première boucle recevant un signal de consigne, et il y a un second actionneur (11) interposé entre le chariot et une zone fixe par rapport à la piste de guidage, ce second actionneur étant asservi à un autre capteur de position adapté à détecter la position relative de la charge utile par rapport au chariot par l'intermédiaire d'une seconde boucle ayant une consigne nulle.

9. Ligne à retard selon la revendication 8, caractérisée en ce que le second actionneur (11) est une roue motrice portée par le chariot et roulant sur la piste de guidage.

10. Ligne à retard selon la revendication 8 ou la revendication 9, caractérisée en ce que la première boucle d'asservissement est en outre connectée à une boucle accessoire comportant un accéléromètre (9) porté par la charge utile.

11. Ligne à retard selon l'une quelconque des revendications 6 à 10, caractérisée en ce que l'actionneur (8) agissant sur la charge utile à partir du chariot est un moteur électromagnétique de type haut-parleur.
